# EUROPEAN PATENT APPLICATION

(11) **EP 4 340 165 A1**
(43) Date of publication of application: **20.03.2024**
(21) Application number: 22827246.4
(22) Date of filing: 17.05.2022
(51) Int. Cl.: H02J 7/00, G02B 27/01

(54) **SMART GLASSES, CHARGER, AND SMART GLASSES ASSEMBLY**

(30) Priority: 24.06.2021 CN 202121421001 U
(71) Applicant: Huawei Technologies Co., Ltd., Shenzhen, Guangdong 518129 (CN)
(72) Inventor: FU, Dongmei, Shenzhen, Guangdong 518129 (CN); LI, Kuokuo, Shenzhen, Guangdong 518129 (CN); GUO, Xiuqing, Shenzhen, Guangdong 518129 (CN); LIN, Yipang, Shenzhen, Guangdong 518129 (CN)
(74) Representative: Goddar, Heinz J.
(86) International application number: PCT/CN2022/093240
(87) International publication number: WO 2022/267748

(57) **Abstract**

Embodiments of this application provide smart glasses, a charger, and a smart glasses assembly. The smart glasses include at least: a frame and a temple, connected to the frame. The temple includes a casing, a charging assembly, and a battery. The casing includes a tail end away from the frame. The tail end includes an end plate having a through hole. Both the charging assembly and the battery are disposed in the tail end. The charging assembly is connected to the end plate. The charging assembly includes a charging contact disposed corresponding to the through hole. The battery is located on a side that is of the charging assembly and that is away from the end plate. A gap is formed between the charging assembly and the battery. The charging assembly is electrically connected to an external charger. According to the smart glasses in embodiments of this application, a problem that a battery in smart glasses in a conventional technology has a safety risk may be resolved.

## Description

This application claims priority to Chinese Patent Application No. 202121421001.5, filed with the China National Intellectual Property Administration on June 24, 2021 and entitled "SMART GLASSES, CHARGER, AND SMART GLASSES ASSEMBLY", which is incorporated herein by reference in its entirety.

### TECHNICAL FIELD

Embodiments of this application relate to the field of electronic device technologies, and in particular, to smart glasses, a charger, and a smart glasses assembly.

### BACKGROUND

With increasingly diversified smart wearable devices, smart glasses gradually enter people's life. The smart glasses may have an independent operating system, in which a program can be installed and functions of a schedule reminder, navigation, image shooting, a video call, and the like can be completed by receiving a user operation instruction. The smart glasses can implement near-eye display scenarios such as augmented reality, virtual reality, and hybrid reality. Images of a real environment and a virtual object can be superimposed on a retina of a user in real time for display by using the smart glasses.

As a wearable electronic product, the smart glasses have a battery for providing electrical energy, and therefore have a high safety requirement on the battery. Therefore, how to improve safety of the battery of the smart glasses is a problem that needs to be urgently resolved.

### SUMMARY

Embodiments of this application provide smart glasses, a charger, and a smart glasses assembly, to resolve a problem that a battery in smart glasses in a conventional technology has a safety risk.

A first aspect of this application provides smart glasses, including at least:
a frame; and
a temple, connected to the frame, where the temple includes a casing, a charging assembly, and a battery, the casing includes a tail end away from the frame, the tail end includes an end plate having a through hole, both the charging assembly and the battery are disposed in the tail end, the charging assembly is connected to the end plate, the charging assembly includes a charging contact disposed corresponding to the through hole, the battery is located on a side that is of the charging assembly and that is away from the end plate, a gap is formed between the charging assembly and the battery, and the charging assembly is electrically connected to an external charger.

The smart glasses provided in embodiments of this application include the frame and the temple. The battery and the charging assembly are disposed in the tail end of the temple. The charging assembly is connected to the end plate of the tail end, and the charging assembly and the battery are disposed at an interval to form a gap between the charging assembly and the battery. During charging, because the gap is formed between the charging assembly and the battery, when the charging assembly slightly deforms toward the battery, the gap may buffer a deformation amount of the charging assembly, reducing a probability that the charging assembly is in contact with the battery after the deformation. In this way, the charging assembly does not apply an extrusion stress to the battery, effectively improving safety of the battery and reducing a possibility of a safety issue of the battery. In addition, the end plate may function as a limit constraint on the charging assembly, helping further reduce a possibility that the charging assembly moves toward the battery.

In a possible implementation, the charging assembly further includes a supporting plate, the charging contact is disposed on a side that is of the supporting plate and that backs onto the battery, the charging assembly is connected to the end plate through the supporting plate, and the supporting plate provides a supporting force for the charging contact in a direction away from the battery.

In a possible implementation, the temple further includes a circuit board disposed in the casing, the charging assembly further includes a wiring terminal, the wiring terminal is disposed between the charging contact and the supporting plate, and the charging contact and the circuit board are separately electrically connected to the wiring terminal.

In a possible implementation, the charging assembly further includes a reinforcing plate, the reinforcing plate is located between the wiring terminal and the supporting plate, and the reinforcing plate provides a supporting force for the wiring terminal in a direction away from the battery.

In a possible implementation, the wiring terminal is bonded to the reinforcing plate;
the reinforcing plate is bonded to the supporting plate; or
the wiring terminal is bonded to the reinforcing plate, and the reinforcing plate is bonded to the supporting plate.

In a possible implementation, the circuit board extends from the tail end to the frame, the circuit board passes through one side of the battery, a groove is provided in an inner wall that is of the casing and that faces the battery, and a part that is of the circuit board and that is corresponding to the battery is accommodated in the groove.

In a possible implementation, the charging assembly further includes an insulation sheet, the insulation sheet is connected to a side that is of the supporting plate and that faces the battery, and the insulation sheet isolates the battery from the supporting plate.

In a possible implementation, the charging assembly further includes a first magnetic attraction member disposed in the tail end, the first magnetic attraction member magnetically connects the temple to an external charger during charging, the first magnetic attraction member is located between the end plate and the supporting plate, and the supporting plate is connected to the end plate through the first magnetic attraction member.

In a possible implementation, the first magnetic attraction member is bonded to the end plate;
the supporting plate is bonded to the first magnetic attraction member; or
the first magnetic attraction member is bonded to the end plate, and the supporting plate is bonded to the first magnetic attraction member.

In a possible implementation, the charging assembly includes two charging contacts disposed at an interval, and the first magnetic attraction member is disposed between the two charging contacts.

In a possible implementation, the end plate has a flat outer end face, and the through hole penetrates the outer end face.

In a possible implementation, the tail end is in a shape of a circular column, an elliptic column, or a square column, and two through holes are symmetrically disposed with respect to a center of the tail end, so that parts that are of the charging contacts and that are exposed from the through holes are symmetrically disposed.

A second aspect of embodiments of this application provides a charger, where the charger includes:
a charging connector, having a plug hole that receives the tail end, where the charging connector includes a second magnetic attraction member and an electrical connection pin, the second magnetic attraction member magnetically attracts the charging assembly, to enable the tail end to enter the plug hole, and the electrical connection pin is electrically connected to the charging contact; and
the second magnetic attraction member includes a first magnet, a second magnet, and a third magnet that are mutually attracted, the first magnet and the second magnet are disposed at an interval, one end of the third magnet is attracted to a middle region of the first magnet, and the other end is attracted to a middle region of the second magnet, to enable the first magnet, the second magnet, and the third magnet to form a first accommodation part and a second accommodation part, and the first accommodation part and the second accommodation part are located on two opposite sides of the third magnet.

In a possible implementation, the charging connector includes a housing, the plug hole is formed in the housing, and the second magnetic attraction member is located in the housing and is disposed close to the plug hole.

In a possible implementation, there are two electrical connection parts, the third magnet passes through between the two electrical connection parts, at least a part of one electrical connection part is located in the first accommodation part, and at least a part of the other electrical connection part is located in the second accommodation part.

In a possible implementation, there are two charging connectors, the charging connector further includes a third magnetic attraction member, and when the charging connector is separated from a temple, the third magnetic attraction members of the two charging connectors attract each other, to enable the two charging connectors to abut against each other.

A third aspect of embodiments of this application provides a smart glasses assembly, including at least: the smart glasses in the foregoing embodiments and the charger in the foregoing embodiments.

### BRIEF DESCRIPTION OF DRAWINGS

FIG. 1 is a schematic diagram of a structure of smart glasses according to an embodiment of this application;
FIG. 2 is a schematic diagram of a partially decomposed structure of the smart glasses according to the embodiment shown in FIG. 1;
FIG. 3 is a schematic diagram of a partial structure of a temple according to an embodiment of this application;
FIG. 4 is a schematic diagram of a first angle of view of a partial structure of a temple according to an embodiment of this application;
FIG. 5 is a schematic diagram of a second angle of view of a partial structure of a temple according to an embodiment of this application;
FIG. 6 is a schematic diagram of a partial structure of an outer cover according to an embodiment of this application;
FIG. 7 is a schematic diagram of a structure of a smart glasses assembly according to an embodiment of this application;
FIG. 8 is a schematic diagram of a partial structure of a charger according to an embodiment of this application;
FIG. 9 is a schematic top view of a partial structure of a charging connector according to an embodiment of this application;
FIG. 10 is a schematic diagram of a sectional structure in an A-A dimension in FIG. 9; and
FIG. 11 is a schematic diagram of a sectional structure in a B-B dimension in FIG. 9.

Descriptions of reference numerals:
1: smart glasses;
2: frame; 21: lens mounting part; 22: nose pad part; 23: connection part;
3: temple; 31: temple tip part; 32: circuit board;
4: casing; 4a: groove; 41: tail end; 41a: central axis; 411: end plate; 411a: through hole; 411b: outer end face; 42: outer cover; 42a: accommodation space; 43: inner cover;
5: charging assembly; 51: charging contact; 52: supporting plate; 53: wiring terminal; 54: reinforcing plate; 55: insulation sheet; 56: first magnetic attraction member;
6: charger; 61: charging connector; 61a: plug hole; 61b: component chamber; 611: housing; 6111: cylinder; 6112: partition board; 6112a: via; 612: second magnetic attraction member; 612a: first accommodation part; 612b: second accommodation part; 6121: first magnet; 6122: second magnet; 6123: third magnet; 613: electrical connection pin; 6131: ejector pin; 6132: spring; 6133: pin socket; 614: third magnetic attraction member; 62: power adapter;
99: battery;
100: mainboard;
X: width dimension; Y: thickness dimension; H: gap.

### DESCRIPTION OF EMBODIMENTS

Currently, common glasses may be usually used as decoration to enhance personal charm of a user, or may be used as a device for isolating harmful light to protect eyes of a user. Smart glasses are a wearable device that has corresponding sensors and can implement corresponding functions. The smart glasses can not only implement some functions of the common glasses, but also perform human-machine interaction based on a use requirement. For example, the smart glasses may facilitate the user in navigation, shooting a photo or a video, making a voice call, reminding an event memo, or the like through voice or a gesture. The smart glasses may be further used to correct a bad habit of the user. For example, when the user sits in an incorrect posture or sits for a long time, the smart glasses may remind the user, to enable the user to correct the sitting posture or get up and relax in a timely manner. The smart glasses may be accessed through a mobile communication network or a wireless network (a Wi-Fi network), for example, for data transfer with a cloud server. With optimization and technology iteration of the smart glasses, the smart glasses are used in a wider range of scenarios. For example, the smart glasses may be used in an indoor scenario such as reading, work, or indoor fitness, or may be used in an outdoor scenario such as running, cycling, or outdoor traveling. In addition, after comfort of the smart glasses is improved, the user may wear the smart glasses for a long time without feeling fatigued or uncomfortable, so that the user may wear the smart glasses to perform some time-consuming activities, for example, navigation, voice chat, or the like.

The smart glasses mainly include a frame and a temple. The temple may rotate relative to the frame for expanding for wearing or folding for storage. Currently, the smart glasses are equipped with a battery that provides electric energy, and the battery is installed in a tail end of the temple. A lithium-ion battery with a high energy density may be used. The battery includes an outer cylinder and a cell disposed in the outer cylinder, and the cell includes a positive plate, a separator, and a negative plate. The separator isolates the positive plate from the negative plate. Because the temple is to be hooked to an ear of the user, a size of the temple is limited. Consequently, a size of a battery installed in the temple is limited, and the battery has a smaller size and a lower capacity. In this way, a standby time of the smart glasses is shorter. Therefore, after the smart glasses are used for a period of time, the user needs to take off and charge the smart glasses. Consequently, the smart glasses cannot meet a requirement of long-time continuous wearing. In addition, when charging the smart glasses, the user is usually accustomed to connecting a charging assembly of the smart glasses to a charger by using a specific force. Because internal space at the tail end of the temple is narrow, to improve space utilization, when the battery and the charging assembly are disposed, the battery and the charging assembly are usually in a close contact state. However, when the user connects the charging assembly of the smart glasses to an electrical connection part of the charger with force, the charging assembly deforms toward the battery and applies an extrusion stress to the battery. After the battery is subject to the extrusion stress for a long period of time or frequently, there is a risk of a short circuit between the positive plate and the negative plate due to cracking of the outer cylinder of the battery that causes leakage of electrolyte, or piercing of a broken part of the outer cylinder into the cell of the battery. Such risk may cause an explosion or a fire in the battery, posing a threat to personal safety of the user. When the smart glasses are in a wearing state, the smart glasses are closer to the head, the ears, the eyes, the nose, and the faces of the user. Therefore, in the event of a serious safety issue with the battery, it is possible that the above parts of the user may be seriously injured.

Based on this, an embodiment of this application provides smart glasses. The smart glasses include a charging assembly and a battery that are disposed at an interval, to form a gap between the charging assembly and the battery. The charging assembly is connected to an end plate of a temple. During charging, because the gap is formed between the charging assembly and the battery, when the charging assembly slightly deforms toward the battery, the gap may buffer a deformation amount of the charging assembly. In addition, when the charging assembly is subject to an external force, the end plate may form a limit constraint on the charging assembly, helping reduce a displacement amount of the charging assembly. In this way, the charging assembly is not prone to be in contact with the battery after being subject to a force, reducing a possibility that the charging assembly applies an extrusion stress to the battery, effectively improving safety of the battery, and reducing a possibility of a safety issue of the battery.

The following describes in detail smart glasses 1 provided in embodiments of this application with reference to the accompanying drawings.

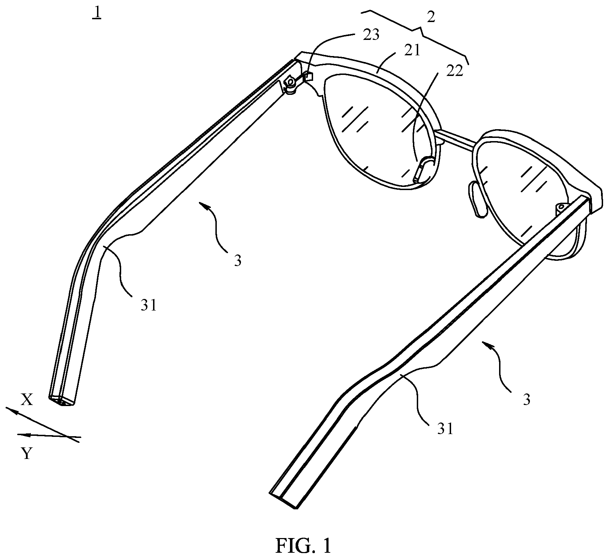

FIG. 1 schematically shows a structure of smart glasses 1 according to an embodiment of this application. Refer to FIG. 1. The smart glasses 1 provided in this embodiment of this application include a frame 2 and a temple 3. The frame 2 includes a lens mounting part 21 and a nose pad part 22. Lenses may be mounted on the lens mounting part 21, for example, nearsighted lenses for nearsighted people, or anti-ultraviolet lenses for outdoor use. The lens mounting part 21 of the frame 2 may be of a closed frame structure, or may be of an open semi-frame structure. The lenses are mounted inside the frame structure or the semi-frame structure. A material of the lens mounting part 21 may be a metal material, for example, iron, aluminum, or steel, or may be a non-metal material, for example, plastic. When a user wears the smart glasses 1, the nose pad part 22 of the smart glasses 1 is rested on the bridge of the nose of the user, to obtain support and bearing of the bridge of the nose. To improve wearing comfort, when the lens mounting part 21 and the nose pad part 22 are integrally formed, the nose pad part 22 is usually provided with a larger bearing surface for contact with the bridge of the nose. Alternatively, when the lens mounting part 21 and the nose pad part 22 are of a split structure, the nose pad part 22 may include a soft silicone pad for contact with the bridge of the nose.

The frame 2 includes two connection parts 23 disposed opposite to each other on the left and right sides. The connection parts 23 are usually disposed at positions of an upper left corner and an upper right corner of the frame 2, and certainly may alternatively be disposed at a middle position of vertical borders on the frame 2. A front end of the temple 3 is rotatably connected to the connection part 23, to enable the temple 3 to be expanded or folded relative to the frame 2. When the user wears the smart glasses 1, the user expands the temple 3 and wears the temple 3 on ears. When the user takes off the smart glasses 1, the user folds the temple 3 to reduce a volume of the smart glasses 1 for easy storage and carrying. In some embodiments, a threaded hole is provided in the connection part 23 of the temple 3 and the frame 2, and a screw is used to pass through the threaded hole of the temple 3 and the connection part 23, to connect the temple 3 to the connection part 23. Alternatively, a through hole is provided in the connection part 23 of the temple 3 and the frame 2, and a rivet is used to pass through the through hole of the temple 3 and the connection part 23 and perform riveting, to connect the temple 3 to the connection part 23.

The temple 3 is usually of a long-strip structure. The temple 3 has the front end and a rear end that are disposed opposite to each other. A temple tip part 31 is formed between the front end of the temple 3 and the rear end of the temple 3. The front end of the temple 3 is connected to the frame 2. When the user wears the smart glasses 1, the temple tip part 31 is mounted to an ear of the user, and a gap may be reserved between the rear end and the ear of the user, to improve wearing comfort. For example, the temple tip part 31 has an arc-shaped contact surface for fitting the ear. The rear end is bent at a pre-determined angle to the temple tip part 31, to enable the rear end to form a limit when the temple 3 is in a wearing state, and therefore the temple 3 is not prone to fall off from the ear. To ensure wearing comfort of and reserve mounting space for an internal component of the temple 3, an overall size of the temple 3 should neither be designed to be excessively large nor excessively small. The temple 3 with a larger size puts a larger weight burden on the ear of the user, severely affecting wearing comfort. The temple 3 with a smaller size leads to small mounting space for the internal component, which is not conducive to a proper layout of the component.

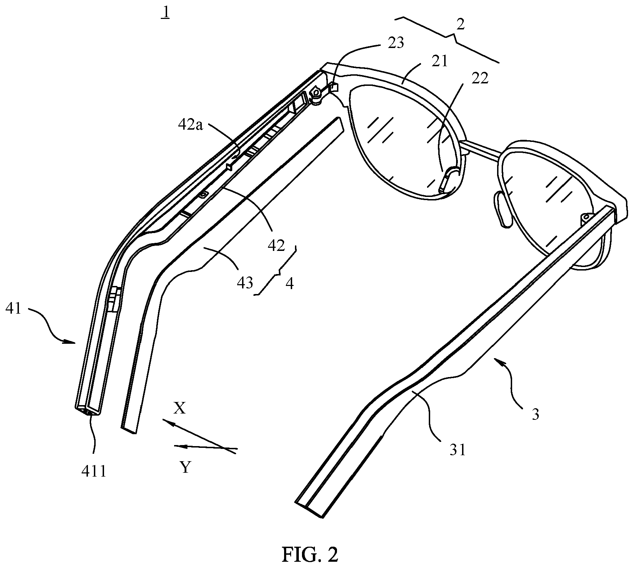

FIG. 2 schematically shows a partially decomposed structure of smart glasses 1 according to an embodiment of this application. Refer to FIG. 1 and FIG. 2. The temple 3 includes a casing 4 and an electronic component disposed in the casing 4. The casing 4 has an internal cavity region. The electronic component is accommodated in the cavity region. When the user wears the smart glasses 1, the casing 4 is in direct contact with the skin of the user. An outer surface of the casing 4 features good skin friendliness, helping improve wearing comfort. The casing 4 needs to feature good rigidity, to meet a requirement of a deformation resistance capability of the casing 4, so that the casing 4 is not prone to deformation when being extruded. This reduces a possibility that the electronic component inside the casing 4 is damaged due to excessive extrusion caused by deformation of the casing 4. A material of the casing 4 may be an insulation material, for example, plastic. The casing 4 provides a mounting basis for the electronic component. In addition, the casing 4 protects the electronic component. The electronic component may include but be not limited to a mainboard 100, a control module, a speaker, a microphone, a gyroscope, and a wireless communication module. The wireless communication module may be configured to support data exchange between the smart glasses 1 and another electronic device by using a wireless communication solution including Bluetooth (Bluetooth, BT), a global navigation satellite system (global navigation satellite system, GNSS), a wireless local area network (wireless local area network, WLAN), frequency modulation (frequency modulation, FM), a near field communication (near field communication, NFC) technology, an infrared (infrared, IR) technology, or the like. In some embodiments, the wireless communication module may be a Bluetooth chip. The smart glasses 1 may perform pairing and establish a wireless connection with a Bluetooth chip of another electronic device by using the Bluetooth chip, to implement wireless communication between the smart glasses 1 and the another electronic device through the wireless connection. In addition, the wireless communication module may further include an antenna. The wireless communication module receives an electromagnetic wave through the antenna, performs frequency modulation and filtering processing on an electromagnetic wave signal, and sends a processed signal to a processor. The wireless communication module may further receive a to-be-sent signal from the processor, perform frequency modulation and amplification on the signal, and convert the signal into an electromagnetic wave for radiation through the antenna.

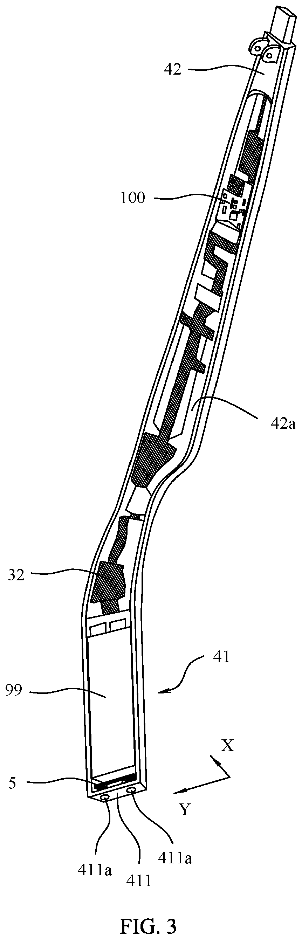

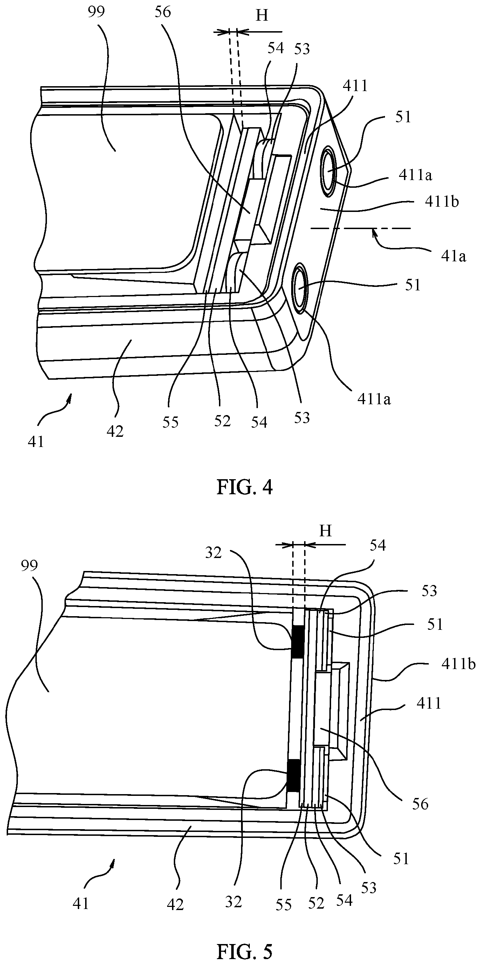

FIG. 3 schematically shows a structure of a temple 3 according to an embodiment of this application. FIG. 4 schematically shows a first angle of view of a partial structure of a temple 3 according to an embodiment of this application. FIG. 5 schematically shows a second angle of view of a partial structure of a temple 3 according to an embodiment of this application. Refer to FIG. 3 to FIG. 5. The casing 4 provided in embodiments of this application has a tail end 41. The tail end 41 is an end away from the frame 2. The tail end 41 includes an end plate 411 having a through hole 411a. An inner surface of the end plate 411 faces the cavity region of the casing 4, and an outer end face 411b of the end plate 411 faces an external environment. The through hole 411a on the end plate 411 penetrates the outer end face 411b and the inner surface, to enable the through hole 411a to be communicated with the cavity region. For example, the outer end face 411b of the end plate 411 is a flat surface. The temple 3 further includes a charging assembly 5 and a battery 99 that are disposed at the tail end 41. The charging assembly 5 and the battery 99 are located in the cavity region. The charging assembly 5 includes a charging contact 51 disposed corresponding to the through hole 411a of the end plate 411. A part that is of the charging contact 51 and that is exposed from the through hole 411a of the end plate 411 is electrically connected to an electrical connection pin of a charger, to enable the charger to charge the battery 99. The battery 99 is located on a side that is of the charging assembly 5 and that is away from the end plate 411. In an axial direction of the through hole 411a, the charging contact 51 is disposed corresponding to the battery 99.

When the smart glasses 1 provided in embodiments of this application need to be charged, the user connects an external charger to the tail end 41 of the temple 3. When the user connects the charger to the tail end 41 of the temple 3, an external force acting on the charger by the user is transferred to the charging contact 51 through the charger, and then transferred to the charging assembly 5, to enable the charging assembly 5 to be slightly deformed due to an acting force facing the battery 99. A gap is formed between the charging assembly 5 and the battery 99. When the charging assembly 5 is electrically connected to the external charger and is subject to a compressive stress from the electrical connection pin, the gap buffers a deformation amount of the charging assembly 5 toward the battery 99, reducing a possibility that the charging assembly 5 is in contact with the battery 99.

The charging assembly 5 is connected to the end plate 411. Therefore, when the charging assembly 5 is subject to an acting force away from the end plate 411, the end plate 411 may apply a tensile stress to the charging assembly 5 in a direction away from the battery 99, to form a limit for the charging assembly 5, reducing a possibility that the charging assembly 5 moves toward the battery 99, and further reducing a possibility that the charging assembly 5 is in contact with the battery 99.

According to the smart glasses 1 in embodiments of this application, to effectively improve a standby time of the smart glasses 1, the battery 99 occupies larger space in the cavity region corresponding to the tail end 41 of the casing 4, to effectively improve a capacity of the battery 99. In addition, smaller space is reserved between the battery 99 and the end plate 411 to dispose the charging assembly 5. In addition, because the charging assembly 5 is a component with high use frequency, the charging assembly 5 has higher requirements for connection stability and reliability. In this way, the charging assembly 5 needs to ensure that a structure of the charging assembly 5 meets a requirement of compactness, to adapt to narrow mounting space. In addition, the charging assembly 5 needs to ensure that connection strength between the charging assembly 5 and the end plate 411 meets a requirement, to effectively reduce a possibility of deformation or displacement caused by an external force.

An embodiment of this application provides the smart glasses 1, including the frame 2 and the temple 3. The battery 99 and the charging assembly 5 are disposed in the tail end 41 of the temple 3. The charging assembly 5 is connected to the end plate 411 of the tail end 41, and the charging assembly 5 and the battery 99 are disposed at an interval to form a gap H between the charging assembly 5 and the battery 99. During charging, the gap H is formed between the charging assembly 5 and the battery 99. Therefore, when the charging assembly 5 is slightly deformed toward the battery 99, the gap H may buffer a deformation amount of the charging assembly 5, reducing a probability that the charging assembly 5 is in contact with the battery 99 after the deformation. In this way, the charging assembly 5 does not apply an extrusion stress to the battery 99, effectively improving safety of the battery 99 and reducing a possibility of a safety issue of the battery 99. In addition, the end plate 411 may function as a limit constraint on the charging assembly 5, helping further reduce a possibility that the charging assembly 5 moves toward the battery 99.

When the user wears the smart glasses 1 provided in this application, the end plate 411 and the charging contact 51 of the tail end 41 are exposed to the outside. However, because a part of the user body does not block the charging contact 51, and a structure of the temple 3 does not block the charging contact 51. Therefore, when the external charger is connected to the tail end 41 of the temple 3, no interference is caused either by the body part of the user or by another structure of the temple 3. In this case, when power of the smart glasses 1 is insufficient, the user may charge the battery 99 of the smart glasses 1 by using the charger without taking off the smart glasses 1 when the smart glasses 1 are in a wearing state. In this way, the user can continue to use the smart glasses 1 so that the smart glasses 1 may be used in a scenario in which the smart glasses 1 are in a wearing state for a long period of time.

In some embodiments, the charging contact 51 and a part that is of the end plate 411 and that forms the through hole 411a may be connected in a sealed manner, to reduce a possibility that external water vapor or dust enters the inside of the temple 3 through the through hole 411a. For example, an edge region of the charging contact 51 may be bonded to the end plate 411 by using a bonding adhesive for sealing.

Refer to FIG. 2. In some embodiments, the casing 4 includes an outer cover 42 and an inner cover 43. When the smart glasses 1 are in a wearing state, the outer cover 42 is away from the head of the user, and the inner cover 43 faces the head of the user. The outer cover 42 and the inner cover 43 are fastened to each other, and form a cavity region at a corresponding position. For example, after the outer cover 42 and the inner cover 43 are fastened to each other, sealing processing may be performed at a joint between the outer cover 42 and the inner cover 43, to enable the outer cover 42 and the inner cover 43 to be connected in a sealed manner, improving overall waterproof and dustproof performance of the temple 3.

In some examples, a slot is provided with one of the outer cover 42 and the inner cover 43, and a fastener is provided with the other. The outer cover 42 and the inner cover 43 are clamped in the slot by using the fastener for connection. Alternatively, after the outer cover 42 and the inner cover 43 are fastened, the outer cover 42 and the inner cover 43 are bonded by using a bonding agent, improving connection strength.

In some examples, the outer cover 42 may be rotatably connected to the connection part 23 of the frame 2. Accommodation space 42a may be disposed on the outer cover 42. The accommodation space 42a extends from the tail end 41 to the front end. The outer cover 42 is provided with the through hole 411a. The through hole 411a is communicated with the accommodation space 42a. For example, a region that is of the accommodation space 42a and that is located at the front end may accommodate the mainboard 100, the control module, the gyroscope, and the wireless communication module. A middle region of the accommodation space 42a may accommodate the speaker and the microphone. A region that is of the accommodation space 42a and that is located at the tail end 41 may accommodate the battery 99 and the charging assembly 5. After the electronic component is mounted in the outer cover 42, the inner cover 43 is fastened to the outer cover 42. For example, the tail end 41 is of a flat structure. In a width dimension X of the tail end 41 of the temple 3, two opposite surfaces of the battery 99 may respectively abut against two opposite inner walls of the outer cover 42 for maximizing space in the width dimension X to increase a size of the battery 99. In addition, the outer cover 42 may firmly fasten the battery 99, reducing a possibility that the battery 99 moves a position. The width dimension X herein is a direction from a lower edge to an upper edge of the temple 3 when the smart glasses 1 are in a bearing state.

Refer to FIG. 4 and FIG. 5. The charging assembly 5 further includes a supporting plate 52. The charging contact 51 is disposed on a side that is of the supporting plate 52 and that backs onto the battery 99. Because internal space of the tail end 41 is narrow, a size of the charging contact 51 is usually designed to be small. The charging contact 51 has a small thickness. Consequently, the charging contact 51 has a weak anti-deformation capability, and is prone to deform when being subject to an external force. For example, the charging contact 51 is of a sheet-shaped structure. In a manner in which the edge region of the charging contact 51 is connected to the end plate 411, a deformation amount of a central region that is of the charging contact 51 and that is corresponding to the through hole 411a is greater than that of the edge region of the charging contact 51. A material of the charging contact 51 may be copper, a copper alloy, aluminum, or an aluminum alloy.

The charging assembly 5 is connected to the end plate 411 through the supporting plate 52. The supporting plate 52 provides a supporting force for the charging contact 51 in a direction away from the battery 99. The charging contact 51 is disposed on a region that is on the supporting plate 52 and that is other than a region connected to the end plate 411. For example, a middle region of the supporting plate 52 is connected to the end plate 411, and the charging contact 51 may be disposed at an end of the supporting plate 52. After the supporting plate 52 is connected to the end plate 411, the supporting plate 52 may press the charging contact 51 against the end plate 411. A gap H is formed between a surface that is of the supporting plate 52 and that faces the battery 99 and a surface that is of the battery 99 and that faces the supporting plate 52. The supporting plate 52 has large mechanical strength, and is not prone to deform when being subject to an external force. When the charging contact 51 is subject to an external force, the charging contact 51 may disperse an acting force on the end plate 411 through the supporting plate 52. After the charging contact 51 is supported by the supporting plate 52, when the charging contact 51 is subject to an external force of a same magnitude, a deformation amount of the charging contact 51 is smaller. In addition, the supporting plate 52 may effectively disperse a stress, so that a deformation amount of the supporting plate 52 toward the battery 99 is small. In this way, after the supporting plate 52 is disposed, a size of the gap H between the charging assembly 5 and the battery 99 may be further reduced, and a reduced size of the gap H may be used to increase the size of the battery 99, helping increase the capacity of the battery 99. Alternatively, when a size of the gap H between the charging assembly 5 and the battery 99 remains unchanged, after the supporting plate 52 is disposed, a possibility that the charging assembly 5 deforms and extrudes the battery 99 may be further reduced. For example, a material of the supporting plate 52 may be steel, iron, or aluminum.

In some examples, the supporting plate 52 may be bonded to the end plate 411. A bonding agent is coated on a surface that is of the supporting plate 52 and that faces the end plate 411, and then the supporting plate 52 is bonded to a predetermined position of the end plate 411. After the bonding agent is solidified, the supporting plate 52 is stably connected to the end plate 411. In the bonding manner, a quantity of components may be effectively reduced. This helps improve structural compactness of the charging assembly 5 and reduce space occupation of the charging assembly 5 while ensuring that connection strength between the supporting plate 52 and the end plate 411 meets a requirement, and helps reduce assembly difficulty of the supporting plate 52 and the end plate 411. Alternatively, the supporting plate 52 and the end plate 411 may be clamped. A slot may be disposed on one of the supporting plate 52 and the end plate 411, and a clamping protrusion may be disposed on the other. The clamping protrusion is inserted into the slot in an extension direction of the slot, to enable the supporting plate 52 and the end plate 411 to be clamped. For example, the slot extends in a thickness dimension Y of the tail end 41. The thickness dimension Y of the tail end 41 is a direction from an inner side surface of the tail end 41 to an outer side surface of the tail end 41. When the smart glasses 1 are in a wearing state, the inner side surface of the tail end 41 faces the head of the user, and the outer side surface backs onto the head of the user. The width dimension X and the thickness dimension Y of the tail end 41 are perpendicular to each other.

Refer to FIG. 3 and FIG. 5. The temple 3 further includes a circuit board 32. The circuit board 32 is disposed in the casing 4. The circuit board 32 is electrically connected to the mainboard 100. The mainboard 100 is disposed at a region at the front end of the temple 3. The circuit board 32 may be used as a conductive element, to implement an electrical connection between the charging contact 51 and the mainboard 100. For example, the circuit board 32 may be a flexible printed circuit (Flexible Printed Circuit, FPC) 32, so that the circuit board 32 may arbitrarily bend and deform, to fully utilize space in the casing 4. The battery 99 is electrically connected to the mainboard 100. Electric energy input by the charging contact 51 passes through the circuit board 32 and the mainboard 100, and is finally fed to the battery 99 to charge the battery 99. The charging assembly 5 further includes a wiring terminal 53. The wiring terminal 53 is disposed between the charging contact 51 and the supporting plate 52, and the charging contact 51 and the circuit board 32 are separately electrically connected to the wiring terminal 53. The supporting plate 52 may provide supporting forces for both the wiring terminal 53 and the charging contact 51, to reduce a possibility that the wiring terminal 53 and the charging contact 51 deform toward the battery 99. For example, the wiring terminal 53 is of a sheet-shaped structure and is stacked with the charging contact 51. This improves structural compactness and reduces an occupation space. An area of a surface that is of the wiring terminal 53 and that faces the charging contact 51 is greater than an area of a surface that is of the charging contact 51 and that faces the wiring terminal 53. As a result, a step is formed between the wiring terminal 53 and the charging contact 51, so that the wiring terminal 53 can completely press against the charging contact 51. A material of the wiring terminal 53 may be copper, a copper alloy, aluminum, or an aluminum alloy.

In some examples, the circuit board 32 and the wiring terminal 53 are integrally formed, so that the circuit board 32 and the wiring terminal 53 form an integrated structure with high mechanical strength, and the circuit board 32 and the wiring terminal 53 are not prone to break or separate. A material of the circuit board 32 may be copper, a copper alloy, aluminum, or an aluminum alloy.

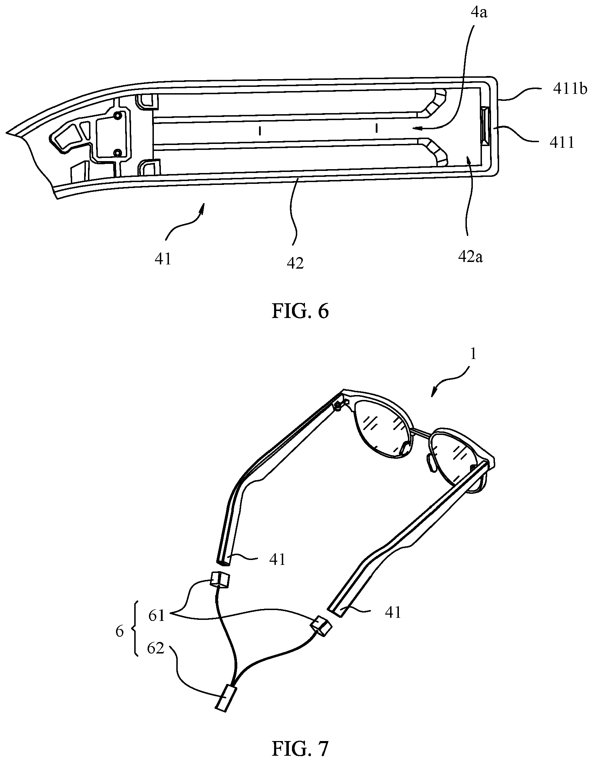

In some examples, FIG. 6 schematically shows a partial structure of an outer cover according to an embodiment of this application. Refer to FIG. 5 and FIG. 6. The circuit board 32 extends from the tail end 41 toward the frame 2, and the circuit board 32 passes through one side of the battery 99. A groove 4a is provided in an inner wall that is of the casing 4 and that faces the battery 99. The groove 4a may be formed on the casing 4 through machining or model casting. A part that is of the circuit board 32 and that is corresponding to the battery 99 is accommodated in the groove 4a. Surfaces on two sides of an opening of the groove 4a contact the battery 99 and support the battery 99. A channel may be formed between the battery 99 and the groove 4a. Apart that is of the circuit board 32 and that is overlapped with the battery 99 is accommodated in the groove 4a, and the circuit board 32 does not exceed the opening of the groove 4a, so that there is no extrusion acting force between the battery 99 and the circuit board 32 that are stacked. This reduces a possibility that an outer cylinder of the battery 99 deforms or an outer cylinder of the battery 99 cracks due to extrusion of the battery 99 by a part that is of the circuit board 32 and that is located below the battery 99. After the outer cylinder of the battery 99 deforms, the outer cylinder extrudes a cell inside the battery 99, leading to twisting and deformation of the cell. Consequently, an insulation separator between a positive plate and a negative plate is torn, posing a risk of contact short circuit between the positive plate and the negative plate. A material of the outer cylinder of the battery 99 is usually aluminum or an aluminum alloy. When the outer cylinder of the battery 99 cracks, there is a risk of leakage of electrolyte inside the battery 99. Alternatively, a sharp burr structure is formed where the outer cylinder breaks. If the burr structure pierces into the cell of the battery 99, there is a risk that the burr structure connects the positive plate to the negative plate, causing a short circuit between the positive plate and the negative plate. The short circuit between the positive plate and the negative plate may cause an explosion or a fire in the battery 99.

In some examples, a shape of the groove 4a matches a shape of a part that is of the circuit board 32 and that is located in the groove 4a, and the groove 4a and the circuit board 32 may be assembled in an interference assembly manner, reducing a possibility of displacement of the circuit board 32 in the groove 4a.

The charging assembly 5 further includes a reinforcing plate 54. The reinforcing plate 54 is located between the wiring terminal 53 and the supporting plate 52. The reinforcing plate 54 provides a supporting force for the wiring terminal 53 in a direction away from the battery 99. When the wiring terminal 53 is subject to an external force pointing to the battery 99, the reinforcing plate 54 may make the wiring terminal 53 not prone to deform toward the battery 99. Because the charging contact 51, the wiring terminal 53, and the reinforcing plate 54 are stacked on the supporting plate 52 in the axial direction of the through hole 411a, the supporting plate 52 and the reinforcing plate 54 may jointly limit the wiring terminal 53 and the charging contact 51. For example, a material of the reinforcing plate 54 may be an insulation material, for example, plastic or hard rubber.

In some examples, an area of a surface that is of the reinforcing plate 54 and that faces the wiring terminal 53 is greater than an area of a surface that is of the wiring terminal 53 and that faces the reinforcing plate 54. As a result, a step is formed between the reinforcing plate 54 and the wiring terminal 53, so that the reinforcing plate 54 can completely press against the wiring terminal 53. A shape of a cross section of the reinforcing plate 54 may match a shape of a cross section of the wiring terminal 53. For example, the cross section of the reinforcing plate 54 and the cross section of the wiring terminal 53 are both in a shape of a circle or a rectangle. An orthographic projection of the reinforcing plate 54 is located inside an orthographic projection of the supporting plate 52 in the axial direction of the through hole 411a. As a result, a step is also formed between the supporting plate 52 and the reinforcing plate 54, so that the supporting plate 52 can completely press against the reinforcing plate 54.

In some examples, the wiring terminal 53 is bonded to the reinforcing plate 54. Alternatively, the reinforcing plate 54 is bonded to the supporting plate 52. Alternatively, the wiring terminal 53 is bonded to the reinforcing plate 54, and the reinforcing plate 54 is bonded to the supporting plate 52. In the bonding manner, a quantity of used components may be effectively reduced. This helps improve structural compactness of the charging assembly 5 and reduce space occupation of the charging assembly 5 while ensuring that connection strength meets a requirement, and helps reduce assembly difficulty of the charging assembly 5. For example, the bonding connection may be implemented by using a bonding adhesive.

The charging assembly 5 further includes an insulation sheet 55. The insulation sheet 55 is connected to a side that is of the supporting plate 52 and that faces the battery 99. The insulation sheet 55 isolates the battery 99 from the supporting plate 52, to reduce a possibility of an electrical connection between the supporting plate 52 and the battery 99. There is a gap H between the insulation sheet 55 and the battery 99. For example, the insulation sheet 55 may be a Mylar film (Mylar film). In some examples, the insulation sheet 55 is bonded to the supporting plate 52. The insulation sheet 55 may cover a surface that is of the supporting plate 52 and that faces the battery 99, so that the insulation sheet 55 isolates the entire supporting plate 52 on a side that is of the supporting plate 52 and that faces the battery 99.

The charging assembly 5 further includes a first magnetic attraction member 56 disposed in the tail end 41. The first magnetic attraction member 56 magnetically connects the temple 3 to an external charger during charging. This makes a connection between the temple 3 and the charger more convenient. In addition, when the temple 3 or the charger is subject to an unexpected tensile force, the temple 3 and the charger may be separated in a timely manner, to reduce a possibility that a charging cable of the charger is pulled apart or a joint between the temple 3 and the frame 2 is pulled apart due to untimely separation of the temple 3 and the charger. The first magnetic attraction member 56 is located between the end plate 411 and the supporting plate 52. The first magnetic attraction member 56 is disposed abutting against the end plate 411, to ensure that a magnetic field of the first magnetic attraction member 56 penetrates the end plate 411 and maintains a strong magnetic field in an outer region of the end plate 411. As a result, when the first magnetic attraction member 56 is magnetically connected to the external charger, the first magnetic attraction member 56 can generate a large enough magnetic attraction force to tighten the tail end 41 and the charger, reducing a possibility that the charger falls off from the tail end 41. In some examples, a concave part is provided on the end plate 411 at a position corresponding to the first magnetic attraction member 56. Apart of the first magnetic attraction member 56 is located in the concave part. A thickness of a region that is of the end plate 411 and in which the concave part is provided is less than a thickness of another region, so that a distance between the first magnetic attraction member 56 and the outer end face 411b of the end plate 411 may be smaller, and the magnetic field in the outer region of the end plate 411 is stronger. A shape of the concave part on the end plate 411 matches a shape of the part that is of the first magnetic attraction member 56 and that is located in the concave part, and an interference fit manner may be used for assembly.

The supporting plate 52 is located on a side that is of the first magnetic attraction member 56 and that is away from the end plate 411. The supporting plate 52 is connected to an end that is of the first magnetic attraction member 56 and that is away from the end plate 411. For example, a middle region of the supporting plate 52 is connected to the first magnetic attraction member 56, and two opposite ends of the supporting plate 52 are of a cantilever structure. The reinforcing plate 54, the wiring terminal 53, and the charging contact 51 are stacked at an end of the supporting plate 52. When the tail end 41 is connected to the charger, after the charging contact 51 is subject to a force, a path of transfer of the external force may be through the charging contact 51, the wiring terminal 53, the reinforcing plate 54, the supporting plate 52, and the first magnetic attraction member 56, and then to the end plate 411.

In some examples, the first magnetic attraction member 56 is bonded to the end plate 411. Alternatively, the supporting plate 52 is bonded to the first magnetic attraction member 56. Alternatively, the first magnetic attraction member 56 is bonded to the end plate 411, and the supporting plate 52 is bonded to the first magnetic attraction member 56. In the bonding manner, a quantity of used components may be effectively reduced. This helps reduce space occupation and assembly difficulty of the charging assembly 5. For example, the bonding connection may be implemented by using a bonding adhesive. For example, the supporting plate 52 is made of a magnetic material, for example, steel or iron, so that the first magnetic attraction member 56 applies a magnetic attraction force to the supporting plate 52, further improving reliability and stability of a connection between the first magnetic attraction member 56 and the supporting plate 52.

In some examples, the charging assembly 5 includes two charging contacts 51 disposed at an interval. Quantities and positions of the through holes 411a, the wiring terminals 53, and the reinforcing plates 54 of the end plate 411 are respectively set in a one-to-one correspondence with quantities and positions of the charging contacts 51. Polarities of the two charging contacts 51 are opposite. To be specific, one of the two charging contacts 51 is a positive electrode, and the other is a negative electrode. During charging through the charging contact 51, the mainboard 100 controls the two charging contacts 51 to adapt to polarities of the two electrical connection pins, so that the two electrical connection pins of the charger do not need to distinguish the polarities of the charging contacts 51. To be specific, the charger may be charged either in forward insertion or in reverse insertion. The first magnetic attraction member 56 is disposed between the two charging contacts 51. Therefore, the first magnetic attraction member 56 may effectively use space reserved between the two charging contacts 51, improving space utilization. In addition, because the first magnetic attraction member 56 is located between the two charging contacts 51, after the first magnetic attraction member 56 is magnetically connected to the charger, respective acting forces of the two electrical connection pins of the charger on the two charging contacts 51 tend to be the same. This ensures that the two charging contacts 51 are subject to balanced forces, and reduces a possibility that one charging contact 51 is subject to a larger force and the other charging contact 51 is subject to a smaller force, which causes the charging contact 51 that is subject to the smaller force to be prone to be in a poor contact with the electrical connection pin.

In some examples, the first magnetic attraction member 56 includes one magnet. Internal space of the tail end 41 of the temple 3 is narrow, and the space reserved between the two charging contacts 51 is smaller. Therefore, when a magnet with a small size is disposed, it can be ensured that a magnetic attraction force generated by the first magnetic attraction member 56 meets a requirement for the magnetic connection to the charger.

In some examples, the outer end face 411b of the end plate 411 is a flat surface, and heights of openings of the two through holes 411a are aligned. A surface that is of the charger and on which the electrical connection pin is disposed may also be a flat surface, so that when the tail end 41 of the temple 3 is connected to the charger, the outer end face 411b of the end plate 411 is in contact with the surface of the charger. Because the outer end face 411b of the end plate 411 has a large plane contact area with the surface of the charger, the charger is not prone to swing relative to the tail end 41 of the temple 3, reducing a possibility that the electrical connection pin is in poor contact with or disconnected from the charging contact 51 due to the swing of the charger.

In some embodiments, the tail end 41 of the temple 3 is in a shape of a circular column, an elliptic column, or a square column, so that the tail end 41 has a principal axis 41a. The two through holes 411a are symmetrically disposed relative to a center of the tail end 41. To be specific, the two through holes 411a are symmetrically disposed relative to the principal axis 41a. Parts that are of the charging contacts 51 and that are exposed from the through holes 411a are symmetrically disposed. For example, the two through holes 411a are disposed at an interval in the width dimension X or the thickness dimension Y of the temple 3. A plug end of the charger may be provided with a plug hole. The plug hole may be in a shape of a circular column, an elliptic column, or a square column, to adapt to the shape of the tail end 41, so that the plug end of the charger may be connected to the tail end 41 through forward insertion or reverse insertion.

In some embodiments, the smart glasses 1 include two temples 3. The two temples 3 are disposed at an interval. When the user wears the smart glasses 1, the user opens the two temples 3 relative to the frame 2, and separately mounts the two temples 3 to the two ears. Functions of the two temples 3 may be the same, so that the two temples 3 may be designed in a redundancy manner. When one temple 3 has insufficient power or is damaged, the other temple 3 may be enabled. Functions of the two temples 3 may alternatively be different, so that corresponding functions are separately disposed on the two temples 3 based on different requirements of the user. The two temples 3 are separately disposed, and each temple 3 may be separately charged by using the charger.

FIG. 7 schematically shows a structure of a smart glasses assembly according to an embodiment of this application. Refer to FIG. 7. The smart glasses assembly includes at least smart glasses 1 and a charger 6. During sales of the smart glasses assembly, the smart glasses 1 and the charger 6 may be placed together in one packing case for display and sales, so that a user who purchases the smart glasses 1 does not need to separately purchase the charger 6.

The smart glasses 1 provided in this embodiment of this application include a frame 2 and a temple 3. The temple 3 is connected to the frame 2. The temple 3 includes a casing 4 and a charging assembly 5. The casing 4 includes a tail end 41 away from the frame 2. The tail end 41 includes an end plate 411 having a through hole 411a. The charging assembly 5 is disposed in the tail end 41. The charging assembly 5 includes a charging contact 51 disposed corresponding to the through hole 411a and a first magnetic attraction member 56 disposed in the tail end 41.

The charger 6 provided in this embodiment of this application includes a charging connector 61. In some embodiments, the charger 6 may include a power adapter 62 and a cable connected to the power adapter 62. An end that is of the cable and that is away from the power adapter 62 is provided with the charging connector 61. The power adapter 62 has a converter interface, for example, the converter interface may be a Type-A interface, a Type-B interface, or a Type-C interface, so that the charger 6 may be externally connected, through the converter interface, to a mobile power supply or a power plug that is connected to a mains and that is equipped by another electronic device. In some other embodiments, the charger 6 may include a power plug and a cable leading from the power plug. For example, the cable may be detachably connected to the power plug. For example, a USB interface is disposed on the power plug. An end of the cable is provided with a USB plug that may be inserted into the USB interface, and an end that is of the cable and that is away from the power plug is provided with the charging connector 61. When the charger 6 is used, the power plug is plugged into a power strip connected to the mains, and the charging connector 61 is connected to the smart glasses 1 to charge the battery 99.

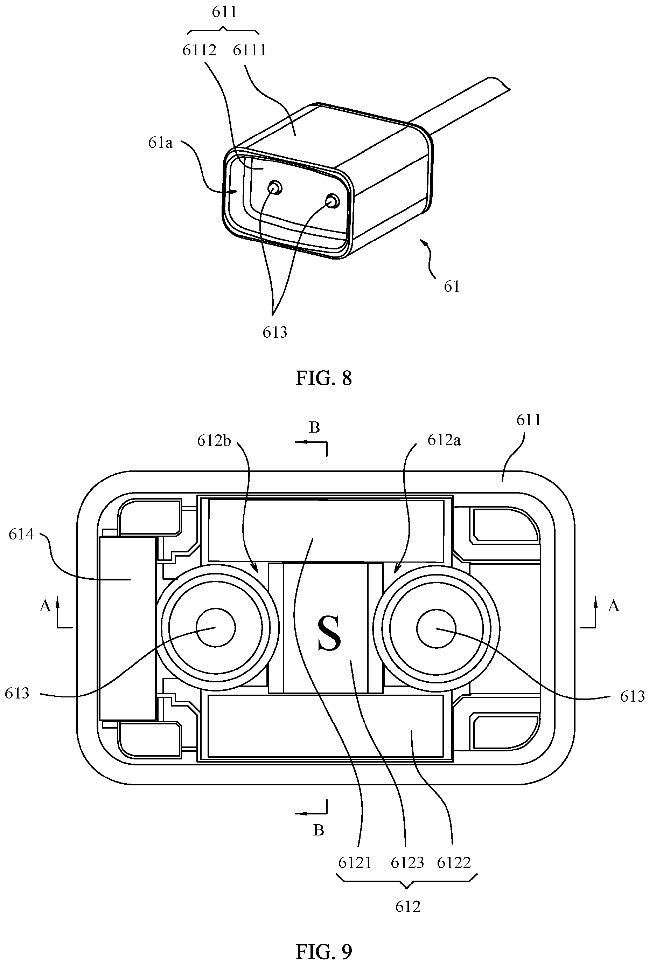

FIG. 8 schematically shows a partial structure of a charger 6 according to an embodiment of this application. Refer to FIG. 8. The charging connector 61 has a plug hole 61a. The plug hole 61a of the charging connector 61 receives the tail end 41 of the temple 3. A part of the tail end 41 of the temple 3 may be inserted into the plug hole 61a. The end plate 411 of the tail end 41 is located in the plug hole 61a. In some embodiments, the part that is of the tail end 41 and that is inserted into the plug hole 61a is covered by a part that is of the charging connector 61 and that forms the plug hole 61a, so that the part is invisible when the charging connector 61 is observed outside. After the tail end 41 is covered by the charging connector 61, friction between the tail end 41 and the charging connector 61 increases, so that the charging connector 61 is not prone to fall off from the tail end 41 of the temple 3. In addition, external conductive dust or conductive liquid cannot enter a joint between the electrical connection pin of the charging connector 61 and the charging contact 51. In addition, the charging connector 61 is subject to a limit constraint of the tail end 41, so that the charging connector 61 is not prone to swing relative to the tail end 41 when being subject to an external force, reducing a possibility of separation of the charging connector 61 from the tail end 41 due to swinging of the charging connector 61.

FIG. 9 schematically shows a partial structure of a charging connector 61 according to an embodiment of this application. Refer to FIG. 9. The charging connector 61 includes a second magnetic attraction member 612 and an electrical connection pin 613. The second magnetic attraction member 612 magnetically attracts the charging assembly 5, to enable the tail end 41 to enter the plug hole 61a. For example, the second magnetic attraction member 612 attracts the first magnetic attraction member 56 of the charging assembly 5, to enable the tail end 41 to enter the plug hole 61a. When a distance between the charging connector 61 and the tail end 41 of the temple 3 is within a predetermined distance range, the first magnetic attraction member 56 and the second magnetic attraction member 612 attract each other. Guided by the plug hole 61a of the charging connector 61, the tail end 41 of the temple 3 is smoothly inserted into the plug hole 61a for connection, and finally, the charging connector 61 and the tail end 41 of the temple 3 remain in a connected state under an action of a magnetic attraction force between the first magnetic attraction member 56 and the second magnetic attraction member 612. That the temple 3 and the charging connector 61 are magnetically connected helps change a habit of the user. In this way, the user may complete the connection between the temple 3 and the charging connector 61 without applying an external force to the charging connector 61 as much as possible, reducing a possibility of deformation of the charging assembly 5 due to plugging of the charging connector 61 into the temple 3 by the user with force. The electrical connection pin 613 of the charging connector 61 is electrically connected to the charging contact 51 to charge the battery 99. A top end of the electrical connection pin 613 of the charging connector 61 may protrude into the plug hole 61a, and the protruding top end facilitates insertion into the through hole 411a of the end plate 411 and is in contact with the charging contact 51.

According to the smart glasses assembly in this embodiment of this application, the charging contact 51 in the smart glasses 1 is disposed in the tail end 41 of the temple 3, and is specifically disposed on the end plate 411 of the tail end 41. In this way, when the user wears the smart glasses 1 provided in this application, the end plate 411 and the charging contact 51 of the tail end 41 are exposed to the outside. Because a body part of the user does not block the charging contact 51, and a structure of the temple 3 does not block the charging contact 51, when the external charger 6 is connected to the tail end 41 of the temple 3, no interference is caused either by the body part of the user, or by another structure of the temple 3. When power of the smart glasses 1 is insufficient, the user may charge the battery 99 of the smart glasses 1 by using the charger 6 without taking off the smart glasses 1 when the smart glasses 1 are in a wearing state. In this way, the user can continue to use the smart glasses 1, and the smart glasses 1 may be in a wearing for a long period of time.

In some embodiments, the smart glasses 1 may further be the smart glasses 1 in any one of the foregoing embodiments.

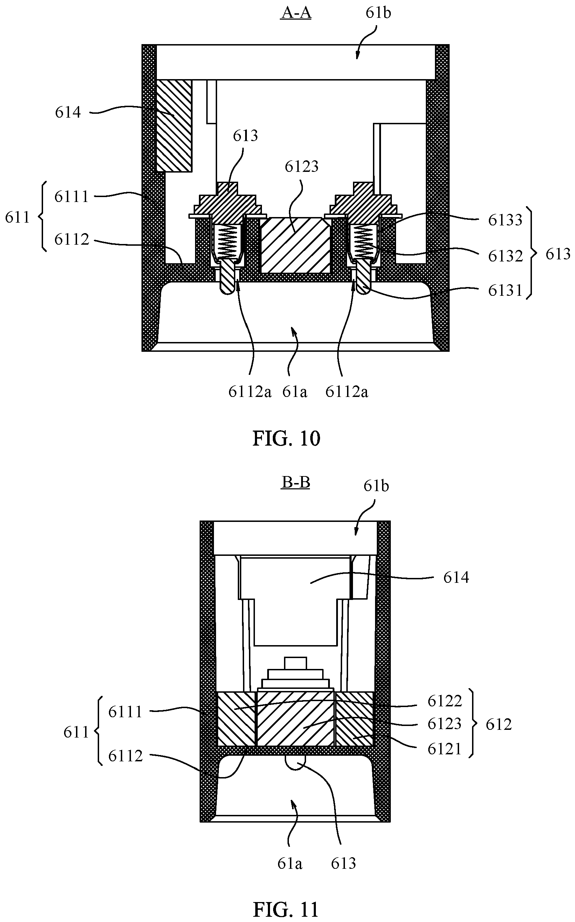

Refer to FIG. 10. In some embodiments, the electrical connection pin 613 includes an ejector pin 6131, a spring 6132, and a pin socket 6133. The pin socket 6133 and the ejector pin 6131 are sleeved with each other, and the spring 6132 is disposed in the pin socket 6133. The ejector pin 6131 may move in an axial direction of the pin socket 6133, to compress or release the spring 6132. When the charging connector 61 is connected to the tail end 41 of the temple 3, the ejector pin 6131 moves toward the pin socket 6133 and compresses the spring 6132. Under an action of an elastic recovery force of the spring 6132, the ejector pin 6131 presses against the charging contact 51, so that the ejector pin 6131 maintains good contact with the charging contact 51. The elastic recovery force of the spring 6132 is transferred to the charging contact 51.

In some embodiments, the charging connector 61 includes a housing 611. The plug hole 61a is formed in the housing 611. The second magnetic attraction member 612 is located in the housing 611 and disposed close to the plug hole 61a. The second magnetic attraction member 612 penetrates the housing 611 and maintains a strong magnetic field in a region of the plug hole 61a, so that when the first magnetic attraction member 56 is magnetically connected to the second magnetic attraction member 612, a large enough magnetic attraction force can be generated to tighten the tail end 41 and the charging connector 61, reducing a possibility that the charging connector 61 falls off from the tail end 41. The second magnetic attraction member 612 is disposed in the housing 611, so that the second magnetic attraction member 612 is not exposed, and the housing 611 protects the second magnetic attraction member 612, effectively reducing a possibility of cracking caused by collision and corrosion of the second magnetic attraction member 612 after being used for a long period of time.

In some examples, the housing 611 includes a cylinder 6111 and a partition board 6112. The partition board 6112 is disposed in the cylinder 6111 and divides the cylinder 6111 into the plug hole 61a and a component chamber 61b. The partition board 6112 has a via 6112a for connecting the plug hole 61a to the component chamber 61b. A part of the electrical connection pin 613 is disposed in the component chamber 61b, and the top end of the electrical connection pin 613 is disposed through the via 6112a. The second magnetic attraction member 612 is located in the component chamber 61b.

In some embodiments, the first magnetic attraction member 56 includes one magnet, and the second magnetic attraction member 612 includes a Halbach array magnet. Internal space of the tail end 41 of the temple 3 is narrow. Therefore, when a magnet with a small size is disposed, it can be ensured that a magnetic attraction force of the first magnetic attraction member 56 meets a requirement. Internal space of the housing 611 of the charging connector 61 is narrow, and a magnetic field needs to penetrate the housing 611. The Halbach array magnet may have a large magnetic attraction force when a size of the Halbach array magnet adapts to the narrow space, so that it can be ensured that the second magnetic attraction member 612 adapts to the narrow space inside the housing 611 when a magnetic attraction force meets a requirement.

Refer to FIG. 9 and FIG. 11. In some embodiments, the Halbach array magnet includes a first magnet 6121, a second magnet 6122, and a third magnet 6123 that are mutually attracted. The first magnet 6121 and the second magnet 6122 are disposed at an interval, one end of the third magnet 6123 is attracted to a middle region of the first magnet 6121, and the other end is attracted to a middle region of the second magnet 6122. Two opposite ends of the first magnet 6121 are located on two opposite sides of the third magnet 6123, and two opposite ends of the second magnet 6122 are also located on the two opposite sides of the third magnet 6123, so that the first magnet 6121, the second magnet 6122, and the third magnet 6123 are arranged in an "I"-shaped manner. This arrangement manner of the first magnet 6121, the second magnet 6122, and the third magnet 6123 can enable the second magnetic attraction member 612 to generate a large enough magnetic attraction force when a volume of the second magnetic attraction member 612 is small. After the tail end 41 of the temple 3 is connected to the charging connector 61, a position of the first magnetic attraction member 56 is corresponding to a position of the third magnet 6123. The first magnet 6121, the second magnet 6122, and the third magnet 6123 form a first accommodation part 612a and a second accommodation part 612b, and the first accommodation part 612a and the second accommodation part 612b are respectively located on the two opposite sides of the third magnet 6123. For example, in a manner of disposing the second magnetic attraction member 612, an N pole of the first magnet 6121 faces the third magnet 6123, and an S pole of the first magnet 6121 is away from the third magnet 6123. An N pole of the second magnet 6122 faces the third magnet 6123, and an S pole of the second magnet 6122 is away from the third magnet 6123. An N pole of the third magnet 6123 faces the plug hole 61a, and an S pole of the third magnet 6123 is away from the plug hole 61a. An S pole of the first magnetic attraction member 56 is close to the outer end face 411b of the end plate 411, and an N pole of the first magnetic attraction member 56 is away from the outer end face 411b of the end plate 411.

There are two charging contacts 51. The first magnetic attraction member 56 is located between the two charging contacts 51. There are two electrical connection pins 613, and the third magnet 6123 passes through between the two electrical connection pins 613. The first magnetic attraction member 56 is located between the two charging contacts 51, and the third magnet 6123 is located between the two electrical connection pins 613. Therefore, after the first magnetic attraction member 56 is magnetically connected to the second magnetic attraction member 612, respective acting forces of the two electrical connection pins 613 on the two charging contacts 51 tend to be the same. As a result, the two charging contacts 51 are subject to balanced forces. This reduces a possibility that one charging contact 51 is subject to a larger force and the other charging contact 51 is subject to a smaller force, which causes the charging contact 51 that is subject to the smaller force to be prone to be in a poor contact with the electrical connection pin 613. Of the two electrical connection pins 613 of the charging connector 61, at least a part of one electrical connection pin 613 is located in the first accommodation part 612a, and at least a part of the other electrical connection pin 613 is located in the second accommodation part 612b, effectively improving space utilization inside the housing 611.

The smart glasses 1 include two temples 3. The two temples 3 are disposed at an interval. There are two charging connectors 61. The plug holes 61a of the two charging connectors 61 respectively receive tail ends 41 of the two temples 3, so that each temple 3 may be separately charged at the same time, effectively improving charging efficiency of the temple 3. The two temples 3 have a same structure, and the two charging connectors 61 also have a same structure. Therefore, either of the two charging connectors 61 may receive either of the two temples 3. As a result, there is no need to first determine whether the charging connector 61 is paired with the temple 3 in a shape, and then connect a paired charging connector 61 to the temple 3. This effectively reduces complexity of a charging process, makes the charging process simple and convenient, and improves satisfaction of use.

In some embodiments, the charging connector 61 further includes a third magnetic attraction member 614. When the charging connectors 61 and the temple 3 are separated, the third magnetic attraction members 614 of the two charging connectors 61 attract each other to enable the two charging connectors 61 to be connected to each other, and outer surfaces of the housings 611 of the two charging connectors 61 to abut against each other. As a result, the two charging connectors 61 do not entangle each other due to free disorder, and there is no need to spend time re-sorting the charging connectors 61 when the charging connectors 61 are used again. When using the two charging connectors 61 again, the user only needs to pull the two charging connectors 61 apart with a proper force. That the two charging connectors 61 are magnetically connected facilitates storage and reuse of the charger 6.

In some examples, the third magnetic attraction member 614 is disposed in the housing 611. For example, the third magnetic attraction member 614 may be disposed on an inner wall of the cylinder 6111 and located in the component chamber 61b, so that the third magnetic attraction member 614 is not exposed. The housing 611 protects the third magnetic attraction member 614, effectively reducing a possibility of cracking caused by collision and corrosion of the third magnetic attraction member 614 after being used for a long period of time. For example, the third magnetic attraction member 614 may be connected to the housing 611 through bonding or clamping.

In some examples, the third magnetic attraction member 614 includes one magnet. An S pole of a third magnetic attraction member 614 in one charging connector 61 faces inward, and an N pole of the third magnetic attraction member 614 faces outward. An N pole of a third magnetic attraction member 614 in the other charging connector 61 faces inward, and an S pole of the third magnetic attraction member 614 faces outward.

In an embodiment, the charger 6 further includes a power adapter 62. The two charging connectors 61 are separately connected to one power adapter 62, to enable an external power supply to be connected to the two charging connectors 61 at the same time by using the power adapter 62. This facilitates use of one mobile power supply or one power plug to charge the two temples 3 at the same time through the two charging connectors 61, reducing a quantity of used cables.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood based on a specific situation.

An apparatus or element in embodiments of this application or an implied apparatus or element needs to have a specific direction and be constructed and operated in a specific direction, and therefore cannot be construed as a limitation to embodiments of this application. In the descriptions of embodiments of this application, the meaning of "a plurality of" is two or more, unless otherwise precisely and specifically specified.

In the specification, claims, and accompanying drawings in embodiments of this application, the terms "first", "second", "third", "fourth", and so on (if available) are intended to distinguish between similar objects but do not necessarily indicate a specific order or sequence. It should be understood that the data termed in such a way is interchangeable in proper circumstances so that the embodiments of this application described herein can be implemented in an order other than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

The term "a plurality of" in this specification means two or more. The term "and/or" in this specification describes only an association relationship for describing associated objects and indicates that there may be three relationships. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. Smart glasses, comprising at least:
a frame; and
a temple, connected to the frame, wherein the temple comprises a casing, a charging assembly, and a battery, the casing comprises a tail end away from the frame, the tail end comprises an end plate having a through hole, both the charging assembly and the battery are disposed in the tail end, the charging assembly is connected to the end plate, the charging assembly comprises a charging contact disposed corresponding to the through hole, the battery is located on a side that is of the charging assembly and that is away from the end plate, and a gap is formed between the charging assembly and the battery.

2. The smart glasses according to claim 1, wherein the charging assembly further comprises a supporting plate, the charging contact is disposed on a side that is of the supporting plate and that backs onto the battery, the charging assembly is connected to the end plate through the supporting plate, and the supporting plate provides a supporting force for the charging contact in a direction away from the battery.

3. The smart glasses according to claim 2, wherein the temple further comprises a circuit board disposed in the casing, the charging assembly further comprises a wiring terminal, the wiring terminal is disposed between the charging contact and the supporting plate, and the charging contact and the circuit board are separately electrically connected to the wiring terminal.

4. The smart glasses according to claim 3, wherein the charging assembly further comprises a reinforcing plate, the reinforcing plate is located between the wiring terminal and the supporting plate, and the reinforcing plate provides a supporting force for the wiring terminal in a direction away from the battery.

5. The smart glasses according to claim 4, wherein
the wiring terminal is bonded to the reinforcing plate;
the reinforcing plate is bonded to the supporting plate; or
the wiring terminal is bonded to the reinforcing plate, and the reinforcing plate is bonded to the supporting plate.

6. The smart glasses according to claim 3, wherein the circuit board extends from the tail end to the frame, the circuit board passes through one side of the battery, a groove is provided in an inner wall that is of the casing and that faces the battery, and a part that is of the circuit board and that is corresponding to the battery is accommodated in the groove.

7. The smart glasses according to any one of claims 2 to 6, wherein the charging assembly further comprises an insulation sheet, the insulation sheet is connected to a side that is of the supporting plate and that faces the battery, and the insulation sheet isolates the battery from the supporting plate.

8. The smart glasses according to any one of claims 2 to 6, wherein the charging assembly further comprises a first magnetic attraction member disposed in the tail end, the first magnetic attraction member magnetically connects the temple to an external charger during charging, the first magnetic attraction member is located between the end plate and the supporting plate, and the supporting plate is connected to the end plate through the first magnetic attraction member.

9. The smart glasses according to claim 8, wherein
the first magnetic attraction member is bonded to the end plate;
the supporting plate is bonded to the first magnetic attraction member; or
the first magnetic attraction member is bonded to the end plate, and the supporting plate is bonded to the first magnetic attraction member.

10. The smart glasses according to claim 8, wherein the charging assembly comprises two charging contacts disposed at an interval, and the first magnetic attraction member is disposed between the two charging contacts.

11. The smart glasses according to any one of claims 1 to 6, wherein the end plate has a flat outer end face, and the through hole penetrates the outer end face.

12. The smart glasses according to claim 11, wherein the tail end is in a shape of a circular column, an elliptic column, or a square column, and two through holes are symmetrically disposed with respect to a center of the tail end, so that parts that are of the charging contacts and that are exposed from the through holes are symmetrically disposed.

13. A charger, configured to charge the smart glasses according to any one of claims 1 to 12, wherein the charger comprises:
a charging connector, having a plug hole that receives the tail end, wherein the charging connector comprises a second magnetic attraction member and an electrical connection pin, the second magnetic attraction member magnetically attracts the charging assembly, to enable the tail end to enter the plug hole, and the electrical connection pin is electrically connected to the charging contact; and
the second magnetic attraction member comprises a first magnet, a second magnet, and a third magnet that are mutually attracted, the first magnet and the second magnet are disposed at an interval, one end of the third magnet is attracted to a middle region of the first magnet, and the other end is attracted to a middle region of the second magnet, to enable the first magnet, the second magnet, and the third magnet to form a first accommodation part and a second accommodation part, and the first accommodation part and the second accommodation part are located on two opposite sides of the third magnet.

14. The charger according to claim 13, wherein the charging connector comprises a housing, the plug hole is formed in the housing, and the second magnetic attraction member is located in the housing and is disposed close to the plug hole.

15. The charger according to claim 13, wherein there are two electrical connection parts, the third magnet passes through between the two electrical connection parts, at least a part of one electrical connection part is located in the first accommodation part, and at least a part of the other electrical connection part is located in the second accommodation part.

16. The charger according to any one of claims 13 to 15, wherein there are two charging connectors, the charging connector further comprises a third magnetic attraction member, and when the charging connector is separated from the temple, the third magnetic attraction members of the two charging connectors attract each other, to enable the two charging connectors to abut against each other.

17. A smart glasses assembly, comprising at least:
the smart glasses according to any one of claims 1 to 12 and the charger according to any one of claims 13 to 16.
